Europäisches Patentamt

European Patent Office

Office européen des brevets

(11) Publication number: 0 536 484 A1

# EUROPEAN PATENT APPLICATION

(21) Application number: 92112284.2

(22) Date of filing: 17.07.92

(51) Int. Cl.⁵: G11B 7/09

(30) Priority: 08.10.91 JP 260395/91

(43) Date of publication of application:
14.04.93 Bulletin 93/15

(84) Designated Contracting States:
DE FR GB

(71) Applicant: PIONEER ELECTRONIC
CORPORATION
No. 4-1, Meguro 1-chome
Meguro-ku Tokyo 153(JP)

(72) Inventor: Kurihara, Toshihiko, c/o Pioneer
Electronic Corp.
Tokorozawa Kojo, 2610, Hanazono 4-chome
Tokorozawa-shi, Saitama, 359(JP)
Inventor: Akiba, Taichi, c/o Pioneer Electronic
Corp.
Tokorozawa Kojo, 2610, Hanazono 4-chome
Tokorozawa-shi, Saitama, 359(JP)
Inventor: Koyama, Masayuki, c/o Pioneer
Electronic Corp.
Tokorozawa Kojo, 2610, Hanazono 4-chome
Tokorozawa-shi, Saitama, 359(JP)

(74) Representative: Reinhard, Skuhra, Weise
Postfach 44 01 51 Friedrichstrasse 31
W-8000 München 40 (DE)

(54) Pickup device for optical recording medium.

(57) A pickup device for an optical recording medium comprising a pair of drive magnets and a driven unit having focusing coils and tracking coils mounted on a pair of coil mounting boards for displacing the driven unit against the drive magnets in a direction of focusing and that of tracking by flowing a current therethrough, wherein an electromagnetic force to be generated by at least one of the magnetic coils is varied from that of the other magnetic coil at the opposite side for displacing a driving center of the driven unit.

FIG. 1B

FIG. 1A

## BACKGROUND OF THE INVENTION

Field of the Invention

This invention relates to an improvement of a pickup device for reading information stored in an optical recording medium such as a video disk, compact disk and the like.

Description of the Prior Art

In a well known pickup device for reading information stored in an optical recording medium of the type described above comprises magnetic coils capable of generating electromagnetic forces in the same direction in order to drive an objective lens in a direction for focusing (a direction of an optical axis, hereinafter called a "focusing direction" ) and a direction for tracking (a radial direction of a disk, hereinafter called a "tracking direction"), respectively, and then the pickup device is displaced while maintaining electromagnetic forces generated by the magnetic coils identical with each other for reading the information recorded on the recording medium. However, it makes hard to read the information correctly if the objective lens rolls on the way of displacement.

Accordingly, in order to prevent the rolling of the objective lens, it is necessary to bring about a driving center of a driven unit, which includes the objective lens, to coincide with the center of gravity thereof. In accordance with a prior art pickup device, the driven unit has been designed symmetrically in both vertical and lateral directions for making the center of gravity of the driven unit coincide with the driving center thereof, or the center of gravity of the driven unit has been adjusted to coincide with the driving center thereof by adding an additional weight.

However, in the prior art method wherein the driven unit is designed symmetrically in the both vertical and lateral directions for making the center of gravity coincide with the driving center of the driven unit, there has been a problem such that the degree of freedom is lowered in designing, thus resulting in difficulties in setting.

Further, in the prior art system wherein the center of gravity is moved by adding the additional weight, there has been another problem such that the adjustment is difficult since it is required to move the center of gravity simultaneously in the both vertical and lateral directions, this in turn increases a weight to the center of gravity for driving, thus lowering the sensitivity and limiting the driving center to an extent within the internal of the driven unit.

It is therefore an object of this invention to eliminate the problems encountered by the prior art device and to provide a pickup device for reading information stored in an optical recording medium, wherein the driving center of a driven unit is moved to coincide with the center of gravity thereof without increasing a weight and the driving center of the driven unit can be moved independently in a focusing direction and tracking direction for providing a simple and easy way to displace the driving center of the driven unit to coincide with the center of gravity thereof.

## SUMMARY OF THE INVENTION

The present invention is subjected to attain the objective as described above. In a pickup device comprising a pair of drive magnets and a pickup unit or a driven unit having a pair of coil mounting boards at the both sides in opposite to the drive magnets, wherein focusing coils and tracking coils are mounted on the pair of coil mounting boards for displacing the driven unit against the drive magnets in both focusing and tracking directions by flowing drive currents through respective coils, a pickup device embodying the present invention is characterized in that an electromagnetic force to be generated by flowing a current through, at least, one of the magnetic coils is varied within the pair of coil mounting boards for displacing the driving center of the driven unit to coincide with the center of gravity thereof.

In accordance with the pickup device for reading information stored in the optical recording medium embodying the present invention, the driving center of the pickup unit, or the driven unit, can be displaced to coincide with the center of gravity thereof by varying the electromagnetic force in such a way as changing a number of turns of the magnetic coils, such as focusing coils and tacking coils, mounted on the pickup unit or by altering a current that flows through any of the magnetic coils while keeping the number of turns of the whole magnetic coils unchanged.

## BRIEF DESCRIPTION OF THE DRAWINGS

Fig. 1A is a disassembled perspective view of a driver unit showing an embodiment of this invention;

Fig. 1B is a disassembled perspective view of a driven unit showing an embodiment of this invention;

Fig. 2 is a front view of a coil mounting board; and

Fig. 3 is a side view of a driven unit for illustrating the act of electromagnetic forces.

## DETAILED DESCRIPTION OF THE PREFERRED EMBODIMENT

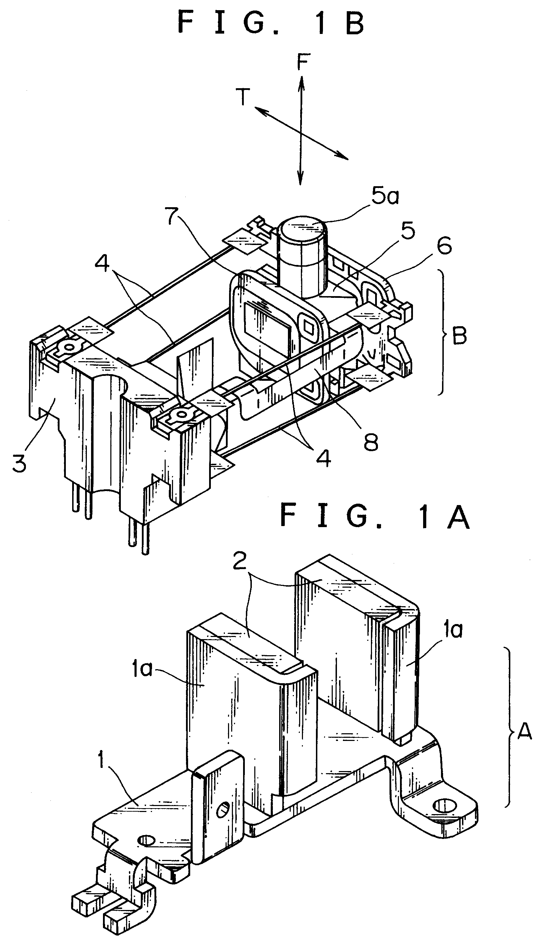

A preferred embodiment of this invention will now be described in detail by referring to the accompanying drawings. Referring first to Fig. 1A, there is shown a driver unit A which comprises a yoke base 1 and a pair of stands 1a's extruding from the yoke base. A pair of magnets 2's magnetized vertically having S poles at their tops and N poles at their bottoms are fastened to the pair of stands 1a's in face to face relationship.

A suspension base 3 for suspending a driven unit B with use of four wire springs 4's is mounted onto the yoke base 1, whereas ends of the four wire springs 4's are fastened to the suspension base 3 at its four corners.

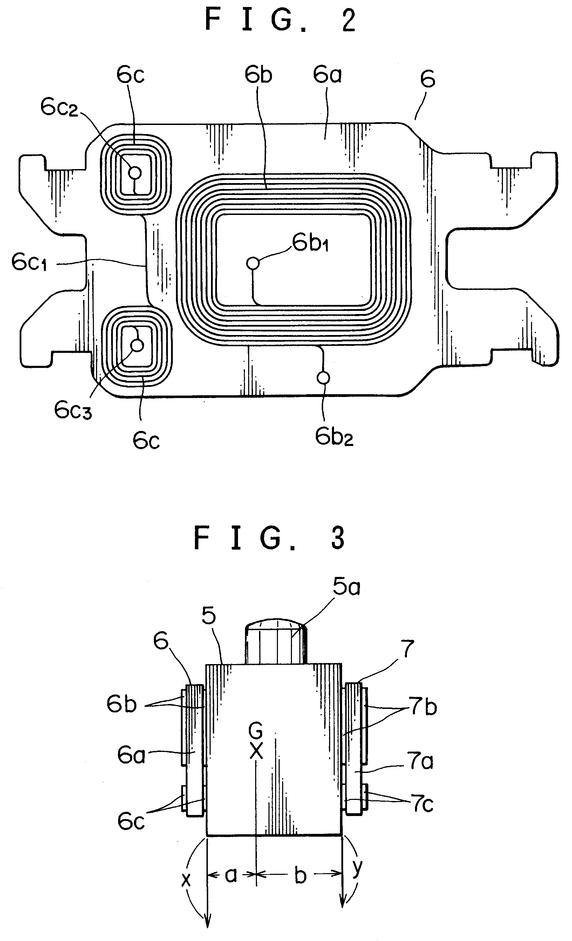

The driven unit B is shown in Fig. 1B, wherein a pickup unit 5 having an objective lens 5a is mounted on the other ends of the four wire springs 4's and, on which pickup unit 5, mounted are a pair of coil mounting boards 6 and 7, one of which is shown in Fig. 2, at the both sides thereof.

The driven unit B is in turn mounted on the yoke base 1 at the suspension base 3, and the pickup unit 5 is positioned between the magnets 2's so that each of the coil mounting boards 6 and 7 is faced to the corresponding magnet 2. A member designated by numeral 8 is a flexible printed circuit board for transmitting a signal derived form the pickup unit 5 to a signal processing circuit (not shown).

As shown in Fig. 2, the coil mounting board 6 (the coil mounting board 7 has the same configuration as that of the coil mounting board 6) consists of focusing coils 6b's at the both sides of a board 6a and two pieces of tracking coils 6c's, whereas all the coils are provided by, for example, printing or the like. Now referring back to Fig. 1B, the focusing direction is shown by an arrow F while the tracking direction is shown by an arrow T.

A center land $6b_1$ of the focusing coil 6b is formed at a through hole and, through which hole, the inner most patterns of the both focusing coils 6b's printed at the inside and outside of the board 6a are electrically connected. Further, outer land $6b_2$ at the outside and a land at the inside (not shown) of the board 6a are connected to a driving circuit.

The pair of tracking coils 6c's are connected by means of a lead pattern $6c_1$. A center land $6c_2$ of one tracking coil 6c is formed at a through hole and, through which hole, connected are the inner most patterns of the tracking coils 6c's at the both sides of the board 6a. Other center lands $6c_3$ at the outside and inside of the board 6a are also connected to the drive circuit.

Accordingly, in accordance with this invention, the driving center of the driven unit A, which driving center is equal to an initial point of a composite vector of the electromagnetic forces generated by the tracking coils 6c and 7c and focusing coils 6b and 7b, is displaced to coincide with the center of gravity thereof by adjusting electromagnetic forces generated in proportional to a number of turns 6n of the focusing coil 6b and that of tracking coils 6c's on the board 6a and to a number of turns 7n of the focusing coil 7b and tracking coils 7c's.

In other words, as seen in Fig. 3, if distances from the coil mounting boards 6 and 7 to the center of gravity of the pickup unit are given by a distance "a" and distance "b", the electromagnetic forces "x" and "y" to be required by the coils provided on the coil mounting boards 6 and 7 for displacing the driving center of the driven unit A to coincide with the center of gravity thereof will be given by the following equation:

$$x/y = b/a$$

Further, in case of varying the electromagnetic forces by changing a number of turns of the coils, since the strength of the electromagnetic forces is proportional to the number of turns 6n and 7n, the above equation may be transformed into:

$$6n/7n = b/a$$

In this way, by changing the number of turns of the respective coils 6b, 6c and 7b, 7c provided on the coil mounting boards 6 and 7, the electromagnetic forces to be generated by the respective coils can be varied. So that the driving center of the driven unit A can be displaced to coincide with the center of gravity thereof only by changing a number of turns of the respective coils.

Further, in the embodiment described above, it has been described to change a number of turns of the focusing coils 6b and 7b and tracking coils 6c and 7c for displacing the driving center of the driven unit, however, it is obvious to those skilled in the art that the electromagnetic force can also be altered by varying driving currents that flow through the magnetic coils provided on the coil mounting boards 6 and 7 without changing the number of turns for displacing the driving center of the driven unit A to coincide with the center of gravity thereof.

Consequently, in accordance with this invention, since the driving centers of the driven unit is displaced by varying the electromagnetic forces in such a way as changing a number of turns of the focusing coils and tracking coils to be mounted on the pickup unit, or the driven unit, or alternatively by changing driving currents that flow through the respective coils while maintaining the number of turns unchanged, the driving centers of the driven unit in the direction of focusing and that of tracking cause no mutual interference while in displacing, and provided is a very simple device to displace the driving center of the driven unit A to coincide with the center of gravity thereof.

It is to be understood by those skilled in the art that the foregoing description relates only to a preferred embodiment of the invention and that various changes and modifications may be made in the invention without departing from the spirit and scope thereof. A pickup device for an optical recording medium comprising a pair of drive magnets and a driven unit having focusing coils and tracking coils mounted on a pair of coil mounting boards for displacing the driven unit against the drive magnets in a direction of focusing and that of tracking by flowing a current therethrough, wherein an electromagnetic force to be generated by at least one of the magnetic coils is varied from that of the other magnetic coil at the opposite side for displacing a driving center of the driven unit.

**Claims**

1. A pickup device for an optical recording medium comprising a pair of magnets as a driver unit, a pickup unit placed as a driven unit between the pair of magnets and a plurality of magnetic coils provided at the both sides of the driven unit opposite to the pair of magnets to generate electromagnetic forces in directions of focusing and tracking,

   whereby an electromagnetic force to be generated by at least one of the magnetic coils is varied from that of the other magnetic coil at the opposite side for displacing a driving center of the driven unit.

2. A pickup device as defined in claim 1, wherein said plurality of magnetic coils are focusing coils and tracking coils mounted on a pair of coil mounting boards which are provided at the both sides of said driven unit opposite to the pair of drive magnets.

3. A pickup device as defined in claim 1, wherein said electromagnetic force is varied by changing a number of turns of at least one of said magnetic coils.

4. A pickup device as defined in claim 1, wherein said electromagnetic force is varied by changing a driving current that flows through at least one of said magnetic coils.

5. A pickup device as defined in claim 1, wherein said plurality of magnetic coils are made by printing.

6. A pickup device as defined in claim 2, 3, 4 or 5, wherein said plurality of magnetic coils are provided on each side of the pair of coil mounting boards.

# F I G. 1 B

# F I G. 1 A

# F I G . 2

# F I G . 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 14, no. 309 (P-1071)4 July 1990 & JP-A-20 98 827 ( FUJITSU LTD ) * abstract * | 1,4 | G11B7/09 |
| A | US-A-5 018 836 (Y. NODA ET AL) * column 1 - column 4; figure 1 * | 1 | |
| A | US-A-4 987 565 (T. IKEGAME) * column 3 - column 5 * | 1 | |
| A | EP-A-0 252 651 (SHARP KK) * page 6, column 42 - page 7; figures 6,7 * | 5 | |
| A | PATENT ABSTRACTS OF JAPAN vol. 13, no. 284 (P-892)29 June 1989 & JP-A-10 70 933 ( TOSHIBA CORP. ) * abstract * | 1 | |
| A | PATENT ABSTRACTS OF JAPAN vol. 13, no. 191 (P-867)20 January  1989 & JP-A-10 17 225 ( NEC CORP. ) * abstract * | 1 | TECHNICAL FIELDS SEARCHED (Int. Cl.5 ) G11B |
| A | PATENT ABSTRACTS OF JAPAN vol. 14, no. 521 (P-1131)15 November 1990 & JP-A-22 18 025 ( OLYMPUS OPTICAL CO. LTD. ) * abstract * | | |
| A | EP-A-0 178 077 (TOSHIBA KK) | | |

The present search report has been drawn up for all claims

| Place of search | Date of completion of the search | Examiner |
|---|---|---|
| THE HAGUE | 22 OCTOBER 1992 | SZUBERT J.M. |

EPO FORM 1503 03.82 (P0401)